# EUROPEAN PATENT APPLICATION

(11) **EP 1 114 773 A2**
(43) Date of publication of application: **11.07.2001**
(21) Application number: 01300002.1
(22) Date of filing: 02.01.2001
(51) Int. Cl.: B64D 11/00

(54) **Pull-down stowage bin assembly**

(30) Priority: 05.01.2000 US 174451 P
(71) Applicant: Britax Heath Tecna Inc., Bellingham, Washington 98226 (GB)
(72) Inventor: Steingrebe, Martin L., Bellingham, Washington 98225 (US); Ahlfs, James J., Bellingham, Washington 98226 (US)
(74) Representative: Hollinghurst, Antony

(57) **Abstract**

A pull-down stowage bin assembly (10) includes a frame (14), a bin (12) coupled to the frame for reciprocating movement between an open position and a stowed position, and a restraint assembly (20) disposed within the bin to selectively restrain objects located within the bin when objects are located in the bin and the bin is in the open position.

## Description

This invention relates generally to pull down stowage bins and, more particularly, to an apparatus for restraining items in a stowage bin.

Pull-down bucket stowage bins are commonly used to stow luggage in vehicles having a passenger compartment, such as buses and commercial aircraft. Typically, such stowage bins are reciprocally mounted to or near the ceiling of the passenger compartment, such that they are located above rows of passenger seats within the vehicle. As mounted, the bins may be reciprocated between an open position, wherein items may be placed within the bin, and a closed position to stow items located within the bin. Although overhead stowage bins are effective at stowing items, such as luggage, they are not without problems.

As an example, luggage stowed within an overhead luggage bin of an aircraft may shift to an unstable position during takeoff or landing of the aircraft or if the aircraft encounters turbulence during flight. As a result, when the luggage bin is opened, the luggage may unexpectedly fall out into the passenger compartment, thereby potentially injuring persons located within the passenger compartment. Thus, such a bin poses a potential hazard.

Therefore, there exists a need for a restraint apparatus for an overhead stowage bin, where the restraint apparatus minimizes the risk of luggage stowed within the bin from falling from the bin when it is opened. Furthermore, there exists a need for such a restraint apparatus that is easily accessible to facilitate the quick removal of stowed luggage.

In accordance with one embodiment of the present invention, a pull-down stowage bin assembly for a vehicle is provided. The pull-down stowage bin assembly includes a frame, a bin coupled to the frame for reciprocating movement between an open position and a stowed position, and a restraint assembly disposed within the bin to selectively restrain objects located within the bin when objects are located in the bin and the bin is in the open position. In accordance with certain other embodiments of the present invention, the restraint assembly includes a door member attached to the bin for selective reciprocating movement between an open position and a closed position.

In another embodiment of the present invention, the pull-down stowage bin assembly includes a limit assembly disposed on the frame and positioned relative to the door member to cause the door member to move into the closed position when the door member is in the open position and the bin is moved from the open position to the stowed position.

In still yet other embodiments of the pull-down stowage bin assembly, the bin assembly includes a retaining mechanism attached to the door member and adapted for locking engagement with a portion of the bin to selectively maintain the door member in the closed position.

In another embodiment of the invention, the surface of the door member is perforated or formed from an open-weave net. This embodiment allows a person unloading the stowage bin to see if there is risk of an article falling from the stowage bin. As a result, a person may take remedial action and reposition the article prior to opening the bin.

In still yet another embodiment of the invention, the retaining mechanism is a wheel mounted on a bracket. The wheel aids in monitoring the amount of articles loaded into the stowage bin. In that regard, the wheel is positioned such that the stowage bin will not close if the stowage bin is overloaded; thus, restricting the door from gliding along the wheel and closing.

The foregoing aspects and many of the attendant advantages of this invention will become better understood by reference to the following detailed description, when taken in conjunction with the accompanying drawings, wherein:
Figure 1 is a perspective view of an overhead pull-down bucket stowage bin in accordance with an embodiment of the present invention;
Figure 2 is an end view of a restraint apparatus for an overhead pull-down bucket stowage bin formed in accordance with one embodiment of the present invention and showing both the restraint apparatus and stowage bin in a closed position; and
Figure 3 is an end view of a restraint apparatus for an overhead pull-down bucket stowage bin formed in accordance with one embodiment of the present invention and showing the stowage bin in an opened position and the restraint apparatus in both an open and closed position.

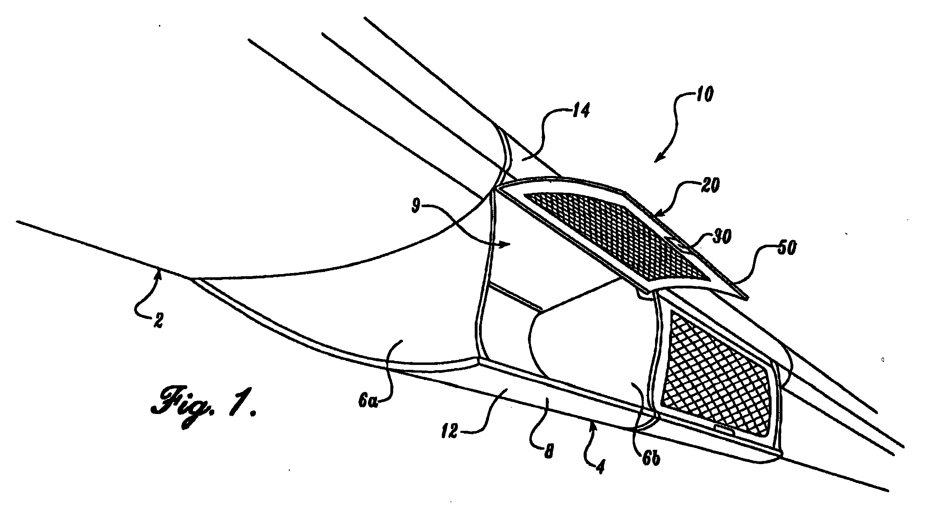

Figures 1 to 3 illustrate a pull-down stowage bin assembly 10 (hereinafter "bin assembly 10") constructed in accordance with an embodiment of the present invention. The bin assembly 10 is suitably fastened within a passenger compartment of a motor vehicle, such as a bus or an aircraft. Such bin assemblies 10 may be fastened to the ceiling or adjoining structure of the passenger compartment, such that they are positioned above passenger seats located within the passenger compartment. Preferably, such bin assemblies 10 are hingedly attached within the passenger compartment for reciprocating movement between a stowed position 2 and an open position 4. Also, although the bin assemblies are illustrated and described herein as luggage bin assemblies, other types of cargo carrying bin assemblies are also within the scope of the present invention.

The bin assembly 10 includes a stowage bin bucket assembly 12 (hereinafter "bin 12") and a restraint assembly 20. The bin 12 is a well known luggage bin having first and second side walls 6a and 6b disposed at opposite sides of a floor 8. As configured and attached, the side walls 6a and 6b and floor 8 form an opening 9 facing the interior of the passenger compartment when the bin assembly 10 is in the open position.

The restraint assembly 20 includes a door 50 attached to the bin assembly 10 by a pair of pivot hinges 22. Preferably, a pivot hinge 22 is located on each side of the door 50 and extends between the door 50 and one of the sidewalls 6a and 6b of the bin assembly 10. In some applications, the use of one pivot hinge 22 may be sufficient to secure the door 50 to the bin assembly 10. It is also preferred that the pivot hinges 22 are designed to automatically open the door 50 when the door 50 is released from the retaining mechanism 30. This may be accomplished through the use of a pivot hinge 22 with coil springs, gas springs, or other, similar devices that would cause the door 50 to pivot to an open position when released from the retaining mechanism 30. Further, although it is preferred that the door 50 of the restraint assembly 20 is hingedly attached to the sidewalls 6a and 6b, other types of attachments, such as slidably attaching the restraint assembly 20 within the bin assembly 10, are also within the scope of the present invention.

The door 50 is sized and configured such that it substantially covers the opening 9 and it does not encroach upon the capacity of the bin assembly 10. The door 50 may be made from any of a variety of various materials strong enough to retain stowed items located within the bin assembly 10. Examples of such materials include perforated materials, mesh materials, opaque materials with a clear window suitable for permitting the user to view into the bin assembly 10, or any other material that allows the user to view inside the bin assembly 10 when the bin assembly 10 is in the open position and the door 50 is in the closed position. Alternatively, the door 50 may be constructed from a lightweight, solid material.

The bin assembly 10 also includes a retaining mechanism 30 and a travel limit assembly 40 mounted to a bin shroud 14 located within the bin assembly 10. The retaining mechanism 30 is suitably positioned in the bin assembly 10, such that a portion of the retaining mechanism 30 is located on the forward lip of the floor 8 and another portion is located on the lower edge surface of the door 50 of the restraint assembly 20. While the type of retaining mechanism 30 is not important to the current embodiment of the present invention, it is important that the retaining mechanism be selectively actuable between a locked and unlocked position.

As a nonlimiting example, the retaining mechanism 30 may be a latch-type device. In this example, the retaining mechanism 30 includes a hook 32 located on the lower end of the door 50 and a catch (not shown). The hook 32 is positioned to be received within the catch located on the lower lip of the floor 8. Optionally, the catch may be located in one or both of the sidewalls 6a and 6b or in the shroud 14. The retaining mechanism 30 should be easy to release and in certain embodiments, allow the door 50 to automatically open when released.

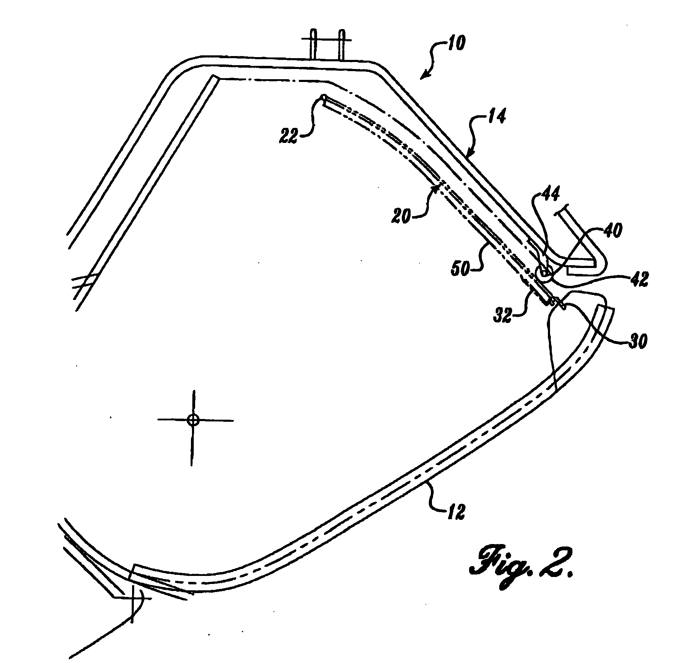

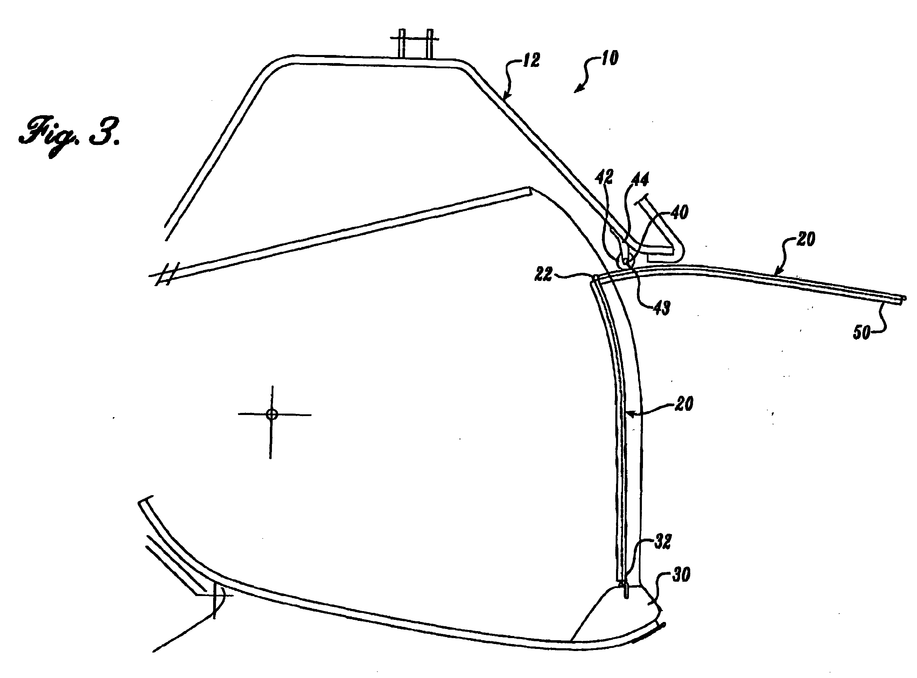

As seen best by referring to Figures 2 and 3, the limit assembly 40 includes a polyurethane wheel 42 journaled to a bracket 44 on an axle 46. The limit assembly 40 is positioned within the bin assembly 10, such that when both the bin assembly 10 and the door 50 are in the open position, the wheel 42 of the limit assembly 40 limits the upward travel of the restraint assembly 20. Further, the limit assembly 40 may automatically displace the restraint assembly 20 into the closed position when the restraint assembly 20 is in the open position and the bin assembly 10 is moved from the open position to the stowed position.

The foregoing aspects of the restraint assembly 20 may be best understood by first referring to Figure 3, wherein both the door 50 of the restraint assembly 20 and the bin 12 are in the open position. As noted above, the limit assembly 40 is seated against the restraint assembly 20 to limit the upward travel of the restraint assembly 20. As the bin 12 is swung upwardly into the stowed position, the restraint assembly 20 impinges against the roller 42, thereby swinging the restraint assembly 20 downwardly into the closed position, as seen in Figure 2. Although a wheel 42 is preferred for the limit assembly 40, other mechanisms suitable for permitting the restraint assembly 20 to rest against it and limit travel while also allowing the restraint assembly 20 to slide against it when the bin assembly 10 is displaced into the stowed position, are also within the scope of the present invention.

In operation, when the bin assembly 10 is in the stowed position, the restraint assembly 20 rests against the limit assembly 40, and is secured in the retaining mechanism 30. As the bin 12 is moved from the stowed to the open position, the restraint assembly 20 moves together with the bin 12. When a user wishes to obtain entrance into the bin assembly 10, the retaining mechanism 30 is opened, thereby allowing the door 50 to open until it rests against the limit assembly 40 and restricts the restraint assembly 20 from hitting the shroud 14. When the user wishes to close the bin 12, the restraint assembly 20 will either close automatically upon moving the bin 12 from the open to the stowed position, as described above, or may be manually pulled closed. The restraint assembly 20 is guided back to the closed position and is locked in the retaining mechanism 30.

## Claims

1. A pull down stowage bin (12) assembly for a vehicle, comprising a bin (12) coupled to a frame (14) for reciprocating movement between an open position and a stowed position, and a restraint assembly (20) disposed within the bin (12) to selectively restrain objects located within the bin (12) when the bin (12) is in the open position.

2. A pull down stowage bin assembly according to claim 1, wherein the restraint assembly (20) comprises a door member (50) attached to the bin (12) for selective reciprocating movement between an open position and a closed position.

3. A pull down stowage bin assembly according to claim 2, further comprising a retaining mechanism (30) attached to the door member (50) and adapted for locking engagement with a portion of the bin (12) to selectively maintain the door member (50) in the closed position.

4. A pull down stowage bin assembly according to claim 2 or 3, further comprising a limit assembly (40) disposed on the frame (14) and positioned to limit travel of the door member (50) during reciprocating movement of the door member (50) between the open and closed positions.

5. A pull down stowage bin assembly according to claim 4, whetein the limit assembly (40) is arranged to cause the door member (50) to move into the closed position when the door member (50) is in the open position and the bin (12) is moved from the open position to the stowed position.

6. A pull down stowage bin assembly according to claim 5, wherein the door member (50) includes a cam surface and the limit assembly (40) comprises a cam follower (42) engaging with said cam surface.

7. A pull down stowage bin assembly according to any preceding claim, wherein the restraint means is attached to the stowage bin (12) bucket assembly by a hinge (22).
